# DEMANDE DE BREVET EUROPEEN

(11) **EP 2 236 335 A1**
(43) Date de publication de la demande: **06.10.2010**
(21) Numéro de dépôt: 10156349.2
(22) Date de dépôt: 12.03.2010
(51) Int. Cl.: B60J 1/16

(54) **Agencement d'une vitre coulissante dans une porte d'un vehicule automobile**

(30) Priorité: 02.04.2009 FR 0952140
(71) Demandeur: Peugeot Citroën Automobiles SA, 78140 Vélizy-Villacoublay (FR)
(72) Inventeur: Guinois, Pascal, 91680, BRUYERES LE CHATEL (FR)
(74) Mandataire: Allain, Laurent

(57) **Abrégé**

La présente invention concerne l'agencement d'une vitre coulissante (1) dans la partie vitrée d'une porte latérale d'un véhicule automobile, la porte comprenant un corps de porte (3) et un cadre de porte (4) entourant la partie vitrée de la porte.

La vitre coulissante (1) comprend un panneau de vitre (11) monté horizontalement mobile par l'intermédiaire de moyens de coulissement fixes et mobiles (12 - 16) encastrés avec les parties correspondantes du panneau de vitre respectivement dans le corps de porte (3) et dans le cadre de porte (4).

## Description

La présente invention concerne l'agencement d'une vitre coulissante dans la partie vitrée d'une porte latérale d'un véhicule automobile, plus particulièrement dans une porte avant, ainsi qu'un véhicule automobile avec un tel agencement.

La présente invention concerne d'une manière plus générale l'agencement d'un panneau coulissant dans une porte d'un véhicule automobile ainsi qu'un véhicule automobile avec un tel agencement.

Dans le domaine des véhicules automobiles et notamment des véhicules dits de tourisme, l'intérêt pour équiper les portes latérales de vitres coulissantes renaît. Des premiers développements dans ce sens ont révélé quelques difficultés et désavantages que la présente invention se propose de résoudre.

En effet, lorsque l'on transpose la conception des vitres coulissantes des véhicules dits de tourisme d'il y a vingt ou trente ans à la technologie d'aujourd'hui, on rencontre deux difficultés. La première est celle de l'encombrement des moyens de coulissement et de guidage des vitres coulissantes et la seconde est celle de la résistance de différents éléments des vitres coulissantes aux chocs latéraux.

Cherchant à réduire le poids des véhicules automobiles, leurs constructeurs utilisent de plus en plus de pièces réalisées en une matière synthétique. Toutefois, pour obtenir les mêmes performances qu'avec des pièces métalliques, les pièces en matière synthétique sont en général plus volumineuses. Pour la mise en place d'une vitre coulissante sur une porte latérale d'un véhicule automobile, cela signifie par exemple une plus grande hauteur des moyens fixes de coulissement, notamment des rails, de la vitre coulissante et par cela une réduction de la zone transparente de la porte latérale. De plus, les rails doivent être montés sur la porte parallèlement à la vitre fixe, ce qui augmente l'épaisseur de la porte.

Toutefois, une réduction de la zone transparente n'est pas seulement inacceptable en raison de la réduction du confort de vision, mais elle est de plus en conflit avec la réglementation devenue plus exigeante que ce n'était le cas à l'époque.

En effet, conformément à la réglementation actuellement en vigueur, le montant avant du cadre de porte d'une porte avant et le montant de pare-brise adjacent doivent être conçus de façon à ne pas gêner ensemble la visibilité vers le trois-quarts avant au-delà d'un angle d'obstruction de 6°. Cet angle d'obstruction, qui est mesuré à partir de la place du conducteur, est fonction de la largeur des montants cités et de toute sérigraphie appliquée sur le pare-brise et/ou le vitrage de la porte avant destinée à recouvrir par exemple des éléments de coulissement d'une vitre coulissante.

Dans la pratique, le recouvrement des parties techniques sur une porte avant présente une largeur moyenne de 53 mm sur les montants et la partie transversale supérieure du cadre de porte et une largeur moyenne de 20 mm en zone inférieure.

L'ajout d'une vitre coulissante ne doit donc pas augmenter la largeur de ces masques.

En même temps, la réglementation actuelle exige que la vitre coulissante soit montée de façon qu'aucune de ses pièces ne puisse s'échapper de ses rails et être projetée à l'intérieur du véhicule.

Le but de l'invention est de remédier aux inconvénients énoncés plus haut tout en prenant en compte les exigences réglementaires évoquées ci-avant.

Le but de l'invention est atteint avec un agencement d'un panneau coulissant dans une porte d'un véhicule automobile, la porte comprenant un corps de porte et un cadre de porte destiné à recevoir le panneau.

Selon la présente invention, le panneau coulissant comprend un panneau proprement dit monté horizontalement mobil par l'intermédiaire de moyens de coulissement fixes et mobiles encastrés avec les parties correspondantes du panneau respectivement dans le corps de porte et dans le cadre de porte.

L'invention trouve une application chaque fois qu'une porte latérale ou une porte arrière d'un véhicule automobile doit être pourvue d'un panneau coulissant sans que l'épaisseur de la porte ne soit augmentée.

Le but de l'invention est plus particulièrement atteint avec un agencement d'une vitre coulissante dans la partie vitrée d'une porte latérale d'un véhicule automobile, la porte comprenant un corps de porte et un cadre de porte entourant la partie vitrée de la porte.

Selon la présente invention, la vitre coulissante comprend un panneau de vitre monté horizontalement mobile par l'intermédiaire de moyens de coulissement fixes et mobiles encastrés avec les parties correspondantes du panneau de vitre respectivement dans le corps de porte et dans le cadre de porte.

Le principe de la présente invention est donc de placer des moyens de coulissement fixes tels des rails de guidage et/ou de coulissement, dans lesquels le panneau de vitre se déplace entre une position d'ouverture et une position de fermeture de la vitre coulissante, à l'intérieur de la structure de la porte de façon que, même lorsque la structure de la porte est déformée et les moyens de coulissement fixes et mobiles sont abîmés ou détachés par un choc latéral, le panneau de vitre soit toujours retenu par la structure de la porte et qu'aucune pièce de la vitre coulissante ne puisse être projetée vers l'intérieur du véhicule.

L'invention concerne également les caractéristiques ci-après, considérées isolément ou selon toute combinaison techniquement possible :
- les moyens de coulissement fixes et mobiles comprennent un rail de coulissement supérieur et un rail de coulissement inférieur ;
- le corps de porte et le cadre de porte comportent des profilés destinés à recevoir des éléments fixes des moyens de coulissement fixes et mobiles;
- les profilés sont disposés entièrement à l'intérieur du corps de porte et à l'intérieur du cadre de porte et conformés pour recevoir des joints d'étanchéité;
- le cadre de porte comprenant un montant avant, un montant arrière et une partie transversale supérieure, les profilés des montants avant et arrière sont conformés pour pouvoir constituer un maintien latéral pour la vitre coulissante respectivement en position ouverte ou en position fermée de celle-ci ;
- les moyens de coulissement fixes et mobiles comprennent un élément de guidage supérieur et un élément de guidage inférieur solidaires du panneau de vitre et engagés respectivement dans le rail de coulissement supérieur et dans le rail de coulissement inférieur ;
- l'élément de guidage supérieur est surmoulé sur la vitre coulissante ;
- l'élément de guidage inférieur est un profilé conformé pour pouvoir être à la fois solidaire de la vitre coulissante et engagé dans le rail de coulissement inférieur.

Le but de l'invention est également atteint avec un véhicule automobile comprenant au moins une porte latérale avec un agencement tel que décrit ci-avant, d'une vitre coulissante.

Le but de l'invention est plus particulièrement atteint avec un véhicule automobile, notamment avec une voiture dite de tourisme, qui comprend au moins une porte avant avec un agencement tel que décrit ci-avant, d'une vitre coulissante.

D'autres caractéristiques et avantages de la présente invention ressortiront de la description non limitative qui suit, d'un mode de réalisation de l'invention. La description est faite en référence aux dessins dans lesquels :
- la figure 1 représente schématiquement la disposition d'une vitre coulissante dans une porte latérale d'un véhicule automobile,
- les figures 2 et 3 représentent le cadre et la partie supérieure du corps d'une porte en coupe transversale, montrant des moyens de coulissement fixes et mobiles à l'intérieur de la structure de la porte,
- la figure 4 représente une variante de réalisation de l'invention,
- les figures 5 et 6 représentent la disposition de certains moyens de l'invention dans les montants avant et arrière d'une porte latérale.

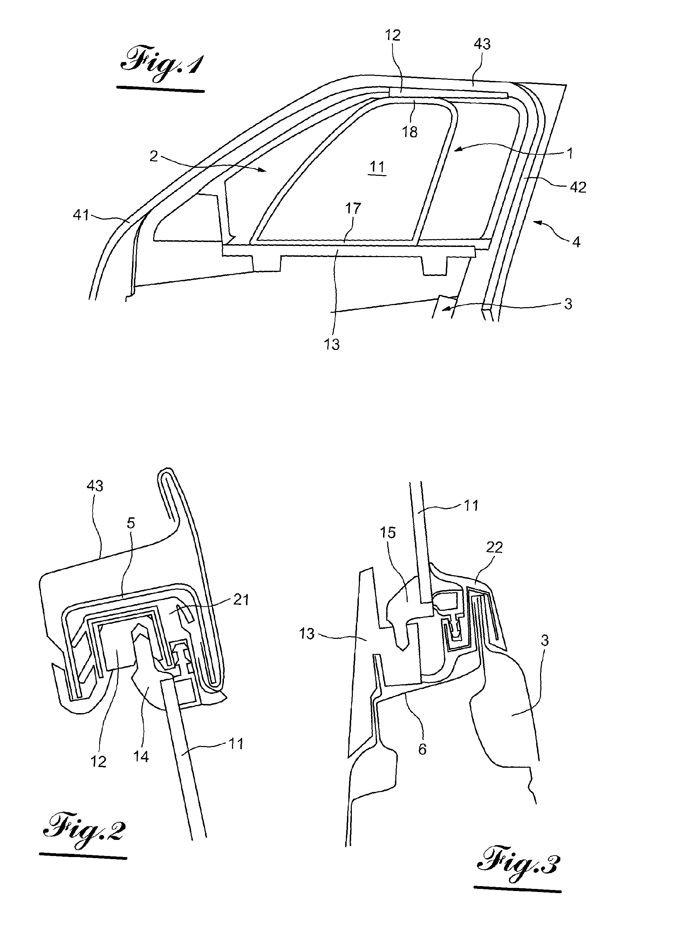

La figure 1 représente de manière très schématique la partie supérieure d'une porte latérale avant d'un véhicule automobile. La porte comprend une vitre coulissante 1 et une vitre fixe 2 disposée dans la partie supérieure de la porte avant du véhicule automobile. Les vitres fixe et mobile sont montées et notamment encastrées dans la partie supérieure d'un corps de porte 3 et, sur les trois autres côtés, dans un cadre de porte 4. Le cadre de porte 4 comprend un montant avant 41, un montant arrière 42 et une partie transversale supérieure 43. Les termes "avant", "arrière", "supérieur" et "inférieur" sont à comprendre dans la position fermée de la porte latérale d'un véhicule automobile.

La figure 1 montre par ailleurs aussi que la vitre mobile 1 comprend un panneau de vitre 11 avec un bord inférieur 17 et un bord supérieur 18, un rail de coulissement supérieur 12 disposé dans la partie transversale supérieure 43 et un rail de coulissement inférieur 13 disposé dans le bord supérieur du corps de porte 3.

La figure 2 représente une partie des dispositions de l'invention par rapport au bord supérieur 18 du panneau de vitre 11. Cette vue en coupe transversale représente le panneau de vitre 11 pourvu d'un organe de guidage 14 engagé dans le rail de coulissement supérieur 12. Le rail de coulissement 12 est encastré dans la partie transversale supérieure 43 moyennant un joint d'étanchéité 21 conformé en conséquence. La figure 2 montre également que la partie transversale supérieure 43 est pourvue d'un profilé en U 5 solidaire de la partie transversale supérieure 43. Le profilé en U 5 définit à l'intérieur de la partie transversale 43 le volume dans lequel le rail supérieur 12 est encastré.

Le joint d'étanchéité 21 est formé de façon à recevoir le rail supérieur 12 et à pouvoir être placé ensemble avec le rail supérieur 12 sans outillage spécifique dans le volume défini par le profilé en U 5. En même temps, le joint d'étanchéité 21 est formé de façon à résister à toute sortie intempestive du volume défini par le profilé en U 5. Et enfin, le joint d'étanchéité 21 est formé de façon à coiffer les bandes proéminentes de la partie transversale supérieure 43 tout en utilisant ces parties proéminentes pour prendre appui à l'encontre de la forme prédéterminée d'arrachement du joint, comme en témoignent les lèvres proéminentes latéralement et prenant appui sur les branches latérales du profilé en U 5.

La figure 2 montre également que l'élément de guidage 14 solidaire du bord supérieur 18 du panneau de vitre 11 y est fixé par surmoulage.

La figure 3 représente les dispositions de l'invention en ce qui concerne le bord inférieur 17 du panneau de vitre 11 et le bord supérieur du corps de porte 3. Cette vue en coupe transversale montre que le corps de porte 3 est pourvu, à sa partie supérieure, d'un profilé 6 fermant vers le haut le volume délimité par les parois formant le corps de porte 3 et définissant en même temps un volume dans lequel est encastré le rail inférieur 13. Comme le profilé en U 5 dans la partie transversale supérieure 43, le profilé 6 est avantageusement soudé sur le corps de porte 3.

La figure 3 montre également que le rail de coulissement inférieur 13 est avantageusement conformé pour coiffer un corps proéminent du corps de porte 3 et de présenter en même temps une rainure dans laquelle un élément de guidage inférieur 15 coulisse ensemble avec le panneau de vitre 11 dont il est solidaire. Le rebord proéminent extérieur du corps de porte 3 est coiffé par un joint d'étanchéité 22 assurant l'étanchéité extérieure de la vitre coulissante par rapport au corps de porte 3.

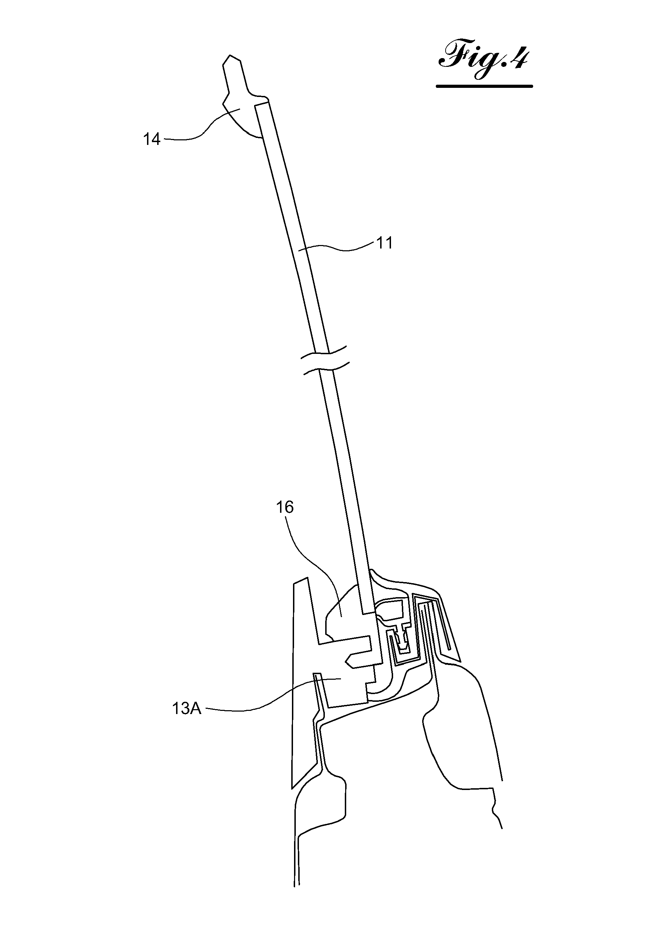

Selon une variante de réalisation représentée sur la figure 4, le bord inférieur du panneau de vitre 11 peut être pourvu d'un profilé ayant substantiellement lui-même la forme d'un rail et qui est engagé dans un profilé 13A ayant lui aussi la forme générale d'un rail. Dans ce cas, le rail 16 coulisse avec le panneau de vitre 11 dans le rail inférieur 13A.

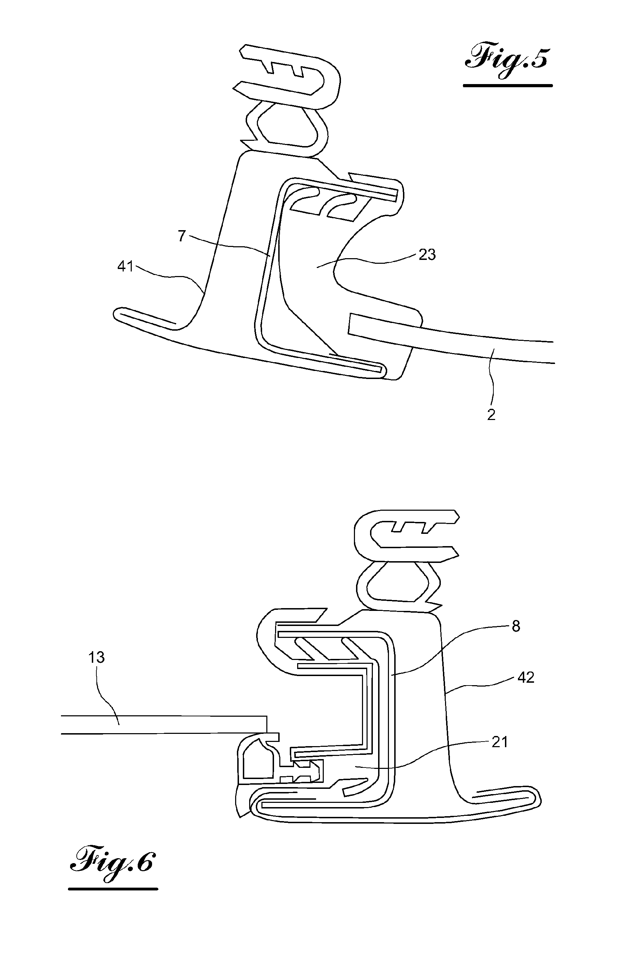

La figure 5 représente les dispositions de l'invention par rapport au montant avant 41. Le montant avant 41 est pourvu d'un profilé en U 7 définissant le volume à l'intérieur du montant 41 dans lequel un joint 23 est encastré et qui reçoit le panneau de vitre 11 en position ouverte. On remarque plus particulièrement sur cette figure que le panneau de vitre 11, lorsqu'il est en position ouverte, rentre dans le montant avant 41 davantage que ne le fait la vitre fixe 2. Cela signifie sur le plan pratique, que l'ouverture de la vitre coulissante 1 est plus grande que ce ne serait le cas avec des dispositions anciennes. De plus, lorsque la vitre coulissante est ouverte, l'obstruction reste minimale dans une partie supérieure de la partie vitrée de la porte, dont l'étendue précise dépend de l'inclinaison du montant avant 41 et de la forme précise de la vitre coulissante 1 par rapport à la géométrie de la vitre fixe 2, c'est-à-dire de la mesure dans laquelle les deux bords avant se recouvrent.

De manière analogue à la figure 5, la figure 6 représente les dispositions de l'invention par rapport au montant arrière 42. Le montant 42 est pourvu d'un profilé en U 8 définissant à l'intérieur du montant arrière 42 le volume dans lequel le panneau de vitre 11 s'engage lorsque la vitre coulissante 1 est en position fermée. Le montant arrière 42 est garni d'un joint d'étanchéité 21 dont la forme correspond sensiblement à celle du joint d'étanchéité 21 engagé dans la partie transversale supérieure 43. Lorsque la vitre coulissante 1 est fermée, le panneau de vitre 11 s'engage assez profondément dans le montant arrière 42, de façon que le bord du panneau de vitre 11 n'augmente pas l'obstruction correspondant à la largeur du montant 42.

Dans l'ensemble, la présente invention présente les avantages suivants :
- les côtes de recouvrement sont similaires à une porte d'un véhicule classique à vitre descendante très réduite par rapport à une porte arrière à vitre coulissante ; et
- augmentation du pourcentage de transparence d'une vitre coulissante d'une porte latérale ;
- augmentation de la taille de l'ouverture de la partie mobile, ce qui évite de réduire la luminosité à l'intérieur du véhicule pour raison d'adaptation aux normes les plus récentes en vigueur ;
- les dispositions de l'invention permettent de conserver les caractéristiques d'obstruction et de dimension diverses d'un cadre de porte initialement conçu pour des portes pourvues d'une vitre montante ;
- montage facile des joints et des rails de la vitre coulissante ;
- pas de collage ni d'autre façon de montage nécessitant un outillage spécial ou ralentissant la fabrication d'une porte latérale ;
- le rail supérieur et l'organe de coulissement de la vite coulissante sont encastrés dans le cadre de porte ; en conséquence, en cas de rupture de l'organe de coulissement, la vitre vient en appui à l'intérieur du cadre de porte et ne risque pas de traverser le véhicule ; et
- le rail inférieur est solidement ancré sur la tôlerie du corps de porte et retient la vitre en cas de rupture de l'organe de coulissement.

## Revendications

1. Agencement d'une vitre coulissante (1) dans la partie vitrée d'une porte latérale d'un véhicule automobile, la porte comprenant un corps de porte (3) et un cadre de porte (4) entourant la partie vitrée de la porte, la vitre coulissante (1) comprenant un panneau de vitre (11) monté horizontalement mobile par l'intermédiaire de moyens de coulissement fixes et mobiles (12 - 16) encastrés avec les parties correspondantes du panneau de vitre respectivement dans le corps de porte (3) et dans le cadre de porte (4), et le corps de porte (3) et le cadre de porte (4) comportant des profilés (5 - 8) destinés à recevoir des éléments fixes (12, 13) des moyens de coulissement fixes et mobiles (12 - 16), **caractérisé en ce que** les profilés (5 - 8) sont disposés entièrement à l'intérieur du corps de porte (3) et à l'intérieur du cadre de porte (4) et conformés pour recevoir des joints d'étanchéité (21 - 23).

2. Agencement selon la revendication 1, **caractérisé en ce que** les moyens de coulissement fixes et mobiles (12 - 16) comprennent un rail de coulissement supérieur (12) et un rail de coulissement inférieur (13).

3. Agencement selon la revendication 1, le cadre de porte (4) comprenant un montant avant (41), un montant arrière (42) et une partie transversale supérieure (43), **caractérisé en ce que** les profilés (7, 8) des montants avant (41) et arrière (42) sont conformés pour pouvoir constituer un maintien latéral pour la vitre coulissante (11) respectivement en position ouverte ou en position fermée de celle-ci.

4. Agencement selon l'une quelconque des revendications 2 à 3, **caractérisé en ce que** les moyens de coulissement fixes et mobiles (12 - 16) comprennent un élément de guidage supérieur (14) et un élément de guidage inférieur (15, 16) solidaires du panneau de vitre (11) et engagés respectivement dans le rail de coulissement supérieur (12) et dans le rail de coulissement inférieur (13).

5. Agencement selon la revendication 4, **caractérisé en ce que** l'élément de guidage supérieur (14) est surmoulé sur la vitre coulissante (11).

6. Agencement selon la revendication 5, **caractérisé en ce que** l'élément de guidage inférieur (16) est un profilé conformé pour pouvoir être à la fois solidaire de la vitre coulissante (11) et engagé dans le rail de coulissement inférieur (13).

7. Véhicule automobile, **caractérisé en ce qu'**il comprend au moins une porte latérale avec un agencement d'une vitre coulissante selon l'une quelconque des revendications 1 à 6.

8. Véhicule automobile, notamment voiture dite de tourisme, **caractérisé en ce qu'**il comprend au moins une porte avant avec un agencement d'une vitre coulissante selon l'une quelconque des revendications 1 à 6.
